# EUROPÄISCHE PATENTANMELDUNG

(11) **EP 0 670 512 A1**
(43) Veröffentlichungstag der Anmeldung: **06.09.1995**
(21) Anmeldenummer: 94103934.9
(22) Anmeldetag: 14.03.1994
(51) Int. Cl.: G03B 21/132, G02F 1/133

(54) **Overheadprojektor für die Projektion von mittels eines LCD dargestellten Bildern**

(30) Priorität: 03.03.1994 EP 94103155
(71) Anmelder: GRUNWALD PROJEKTOREN AG, FL-9491 Ruggell (LI)
(72) Erfinder: Grunwald,Peter Hein, FL-9491 Ruggell (LI)
(74) Vertreter: Junius, Walther, Dr.

(57) **Zusammenfassung**

Die Erfindung betrifft einen Overheadprojektor für die Projektion von mittels eines LCD dargestellten Bildern, bestehend aus einem Gehäuse, an dem ein Tragarm für den Projektionskopf angeordnet ist, welches in seiner Oberfläche eine glasklare Platte aufweist und in welchem die Lichtquelle, eine Fresnellinse, Gebläse und Elektronik untergebracht sind. Es ist die Aufgabe der Erfindung, mit einfachen Mitteln die aufgezeigten Probleme zu lösen und insbesondere ein leichtes, lichtintensives Gerät zu schaffen, das sicher arbeitet und sich durch eine hohe Projektionshelligkeit auszeichnet. Die Erfindung besteht darin, daß die Lichtquelle eine Metalldampflampe aufweist, daß die Metalldampflampe mit Hilfe einer elektronischen Steuerungsvorrichtung betrieben wird, daß das Gehäuse zwei von je einem Ventilator belüftete Räume aufweist, die durch eine thermische Isolierung voneinander getrennt sind, von denen der eine die Metalldampflampe und der andere die Fresnellinse, das LCD und Elektronik aufnimmt.

## Beschreibung

Die Erfindung betrifft einen Overheadprojektor für die Projektion von mittels eines LCD dargestellten Bildern, bestehend aus einem Gehäuse, an dem ein Tragarm für den Projektionskopf angeordnet ist, welches in seiner Oberfläche eine glasklare Platte aufweist und in welchem die Lichtquelle, eine Fresnellinse, Gebläse und Elektronik untergebracht sind.

Die Projektion von mittels eines LCD dargestellten Bildern, und unter Bildern sind auch schriftliche, mathematische, arithmetische und geometrische und sonstige Darstellungen verstanden, mit Hilfe eines Overheadprojektors gewinnt immer größere Bedeutung, weil mittels eines Computers erzeugte Bilder und sonstige Darstellungen einer großen Zuschauer- und -hörerschaft zugänglich gemacht werden können und dabei noch beliebige spontan entworfene schriftliche oder zeichnerische Darstellungen dem projizierten Bild überlagert werden können.

Die Schwierigkeiten dieser Art der Projektion liegen in der Wärmeempfindlichkeit des LCDs und in der schlechten Lichtdurchlässigkeit des LCDs, insbesondere des FarbLCDs, das in der Regel nur 3 % des auftreffenden Lichtes durchläßt, die restlichen 97 % jedoch teilweise reflektiert und teilweise absorbiert, wozu die vielen an Schichtgrenzen Luft-Glas, Glas-Flüssigkristalle, Glas-Elektroden erfolgenden Mehrfachreflektionen erheblich beitragen, indem sie in das LCD eingetretene Lichtenergie im Inneren des LCDs in Wärme umwandeln. Dabei darf ein LCD sich jedoch nicht wesentlich erwärmen, soll die Anordnung der Flüssigkristalle im LCD nicht gestört werden.

Es wurden bereits vielfältige Versuche unternommen, um die hier auftretenden Probleme einer zu geringen Helligkeit bei der Projektion und einer zu starken Aufheizung des LCDs bei der Projektion in den Griff zu bekommen: Man überlegte, von der Beleuchtung mit Halogenlampen zu Metalldampflampen überzugehen, obwohl diese von ihrem Anschaffungspreis, dem Gewicht ihrer für den Betrieb notwendigen Versorgungsgeräte und ihrer bei einem Innendruck von 20 bar bestehenden Explosionsgefährlichkeit keineswegs für den Projektionbetrieb vor einer größeren Zuhörerschaft ideal sind. Diese Probleme verhinderten bisher die Projektion von mit LCDs erzeugten Bilddarstellungen in größerem Maße, obwohl ein erhebliches Bedürfnis hierfür besteht: Denn farbige Darstellungen von Videobildern und im Computer erzeugten Bildern, bei denen ein Vortragender zusätzlich noch beliebig hereinschreiben und zeichnen kann, vor einem breiten Publikum bieten universelle Möglichkeiten der Unterhaltung und Belehrung.

Die vorliegende Erfindung vermeidet die Nachteile des Standes der Technik. Es ist die Aufgabe der Erfindung, mit einfachen Mitteln die aufgezeigten Probleme zu lösen und insbesondere ein leichtes, lichtintensives Gerät zu schaffen, das sicher arbeitet und sich durch eine hohe Projektionshelligkeit auszeichnet.

Die Erfindung besteht darin, daß die Lichtquelle eine Metalldampflampe aufweist, daß die Metalldampflampe mit Hilfe einer elektronischen Steuerungsvorrichtung betrieben wird, daß das Gehäuse zwei von je einem Gebläse belüftete Räume aufweist, die durch eine thermische Isolierung voneinander getrennt sind, von denen der eine die Metalldampflampe und der andere die Fresnellinse, und die Elektronik für die Metalldampflampe sowie die Elektronik für das LCD aufnimmt.

Dabei ist es insbesondere vorteilhaft, wenn das LCD in dem Raum untergebracht ist, welcher die Elektronik für die Metalldampflampe sowie die Elektronik für das LCD aufnimmt, und daß in Strömungsrichtung des Kühlluftstromes zuerst die Elektronik für die Metalldampflampe, dahinter das LCD und dann die Elektronik für das LCD angeordnet ist.

Hierdurch gelingt es, leichtes, lichtintensives Gerät zu schaffen, das sicher arbeitet und sich durch eine hohe Projektionshelligkeit auszeichnet. Der Betrieb mit einer Metalldampflampe bringt eine sehr hohe Helligkeit, die Unterbringung der Metalldampflampe in einem gesonderten Raum bringt hohe Sicherheit gegen durch eine Explosion eintretende Schäden, aber auch eine verbesserte Möglichkeit der Kühlung sowohl der Lampe als auch des LCDs als auch der Elektronik. Die Anwendung einer Elektronik als Netzgerät für die Metalldampflampe bringt eine erhebliche Gewichtsverminderung, weniger elektromagnetische Störstrahlung, weniger elektromagnetische Störungen in der LCD-Elektronik gleichzeitig aber auch mehr Sicherheit für den Betrieb der Metalldampflampe mit sich.

Dabei ist es zweckmäßig, wenn diese beiden Räume im Overheadprojektor zumindest teilweise übereinander angeordnet sind, wobei der obere Raum Teile einer explodierenden Metalldampflampe abzufangen imstande ist, und wenn die Richtung des Luftstromes im einen Raum quer zu der Richtung des Luftstromes im anderen Raum verläuft, so daß die Gefahr gering ist, daß erwärmte Kühlluft des einen Raumes nach dem Abströmen in die Umgebungsluft vom Ventilator des anderen Raumes angesaugt wird.

Dabei ist es vorteilhaft, wenn der das LCD und die Elektronik aufnehmende Raum oberhalb des die Metalldampflampe aufnehmenden Raumes angeordnet ist und durch einen seitlich des die Metalldampflampe aufnehmenden Raumes befindlichen Luftkanal winkelförmig gestaltet ist, wodurch die Sicherheit gegen Explosionsfolgen erhöht und die Kühlung der Elektonik und des LCDs verbessert werden kann.

Vorteilhaft ist es, wenn der die Metalldampflampe aufnehmende Raum von einem Axialgebläse und der das LCD und die Elektronik aufnehmende Raum von einem Querstromgebläse durchlüftet ist. Dadurch wird erreicht, daß die Metalldampflampe in ihrer besonderen geometrischen Gestalt in einem im Querschnitt kreisförmigen Luftstrom und die Elektronik und das LCD in einem bandförmigen Luftstrom hervorragend gut gekühlt werden.

Soll das Gehäuse des Overheadprojektors möglichst flach ausgeführt sein, um den Overheadprojektor beispielsweise als Reiseprojektor zu gestalten, ist es zweckmäßig, wenn die Trennwand zwischen den beiden Räumen durch einen Umlenkspiegel oder eine den Umlenkspiegel tragende Wand gebildet ist.

Eine besonders intensive Kühlung wird dadurch erreicht, daß im Luftstrom des den LCD und Elektonik aufnehmenden Raumes in Strömungsrichtung zuerst die die Metalldampflampe betreibende Elektronik, dann das LCD und schließlich die das LCD betreibende Elektronik untergebracht sind. Das hat auch den Vorteil, daß die die Metalldampflampe betreibende Elektronik die intensivste Kühlung erfährt, was deren Ausfall sicher vermeidet, so daß hierdurch die Gefahr einer Explosion der Metalldampflampe gravierend vermindert wird.

Dabei kann es aus räumlichen Gründen vorteilhaft sein, wenn das Querstromgebläse zwischen der die Metalldampflampe betreibenden Elektronik und dem LCD angeordnet ist.

Weiterhin kann es aus baulichen Gründen vorteilhaft sein, wenn die Fresnellinse eine Begrenzungswand zwischen dem das LCD und Elektronik aufnehmenden Raum und dem die Metalldampflampe aufnehmenden Raum bildet.

Vorteilhaft kann es aber auch sein, wenn eine nur Kaltlicht durchlassende Platte die Begrenzungswand zwischen dem das LCD und die Elektronik aufnehmenden Raum und dem die Metalldampflampe aufnehmenden Raum bildet.

Der das LCD und die Elektronik sowie das Querstromgebläse aufnehmende Raum braucht nicht winkelförmig gestaltet zu sein, es besteht auch die Möglichkeit, daß der das LCD und die Elektronik sowie das Querstromgebläse aufnehmende Raum auf zwei Seiten über den die Metalldampflampe aufnehmenden Raum übersteht. Dadurch ergibt sich eine Gehäuseform, die sich besonders leicht tragen läßt, weil durch die über den die Metalldampflampe aufnehmenden Raum überstehenden Teile des das LCD und die Elektronik sowie das Querstromgebläse aufnehmenden Raumes auf zwei Seiten mit den Händen leicht zu fassende Vorsprünge gebildet sind.

Da eine Metalldampflampe im allgemeinen mehr als 750 Betriebsstunden arbeitet, ohne durch Explosion zerstört zu werden, ist für den Betrieb der Metalldampflampe ein Betriebsstundenzähler und eine vom Betriebsstundenzähler gesteuerte Abschaltvorrichtung vorgesehen, die das Projektionsgerät nach 750 Betriebsstunden außer Betrieb setzt, wobei es zweckmäßig ist, wenn eine bestimmte Zeit vor der Außerbetriebssetzung eine Vorwarneinrichtung in Tätigkeit tritt und durch Licht- oder akustische Signale auf das Ende der Betriebsdauer hinweist.

Vorteilhaft ist es, wenn für den Betrieb der Metalldampflampe ein Betriebsstundenzähler und eine vom Betriebsstundenzähler gesteuerte Abschaltvorrichtung vorgesehen ist, die das Projektionsgerät nach einer bestimmten Anzahl von Betriebsstunden, vorzugsweise 750 Betriebsstunden, außer Betrieb setzt, wobei es zweckmäßig ist, wenn eine bestimmte Zeit vor der Außerbetriebssetzung eine Vorwarneinrichtung in Tätigkeit tritt und durch Licht- oder akustische Signale auf das Ende der Betriebsdauer hinweist.

Das Wesen der Erfindung ist nachstehend anhand von in der Zeichnung schematisch dargestellten Ausführungsbeispielen näher erläutert. Es zeigen:

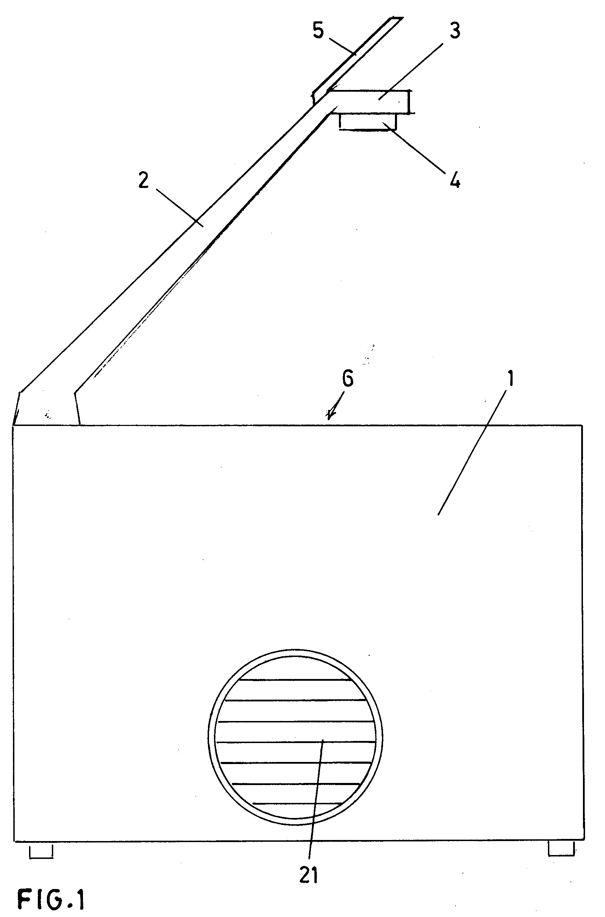

- Fig.1: eine Ansicht des Overheadprojektors,
- Fig.2: einen Querschnitt durch das Gehäuse des Overheadprojektors,
- Fig.3: einen Längsschnitt durch das Gehäuse des Overheadprojektors,
- Fig.4: einen Querschnitt durch das Gehäuse eines anderen Overheadprojektors,
- Fig.5: einen Längsschnitt durch das Gehäuse des anderen Overheadprojektors,
- Fig.6: einen Querschnitt durch das Gehäuse eines weiteren Overheadprojektors.
- Fig.7: einen Längsschnitt durch das Gehäuse des anderen Overheadprojektors, auch mit zwei getrennten Belüftungskanälen, jedoch mit auf die Schreibplatte aufgelegtem Flüssigkristallanzeigegerät,
- Fig.8: einen Querschnitt durch das Gehäuse eines weiteren Overheadprojektors,auch mit zwei getrennten Belüftungskanälen, jedoch mit auf die Schreibplatte aufgelegtem Flüssigkristallanzeigegerät.

Der Overheadprojektor besteht aus einem Gehäuse 1, einem Tragarm 2, welcher bei vielen Typen klappbar ist und einem Projektionskopf 3, welcher ein Objektiv 4 und einen Umlenkspiegel 5 aufweist. Die Oberfläche des Gehäuses 1 bildet eine glasklare Schreibplatte 6. Im Inneren des Gehäuses befindet sich die Lichtquelle mit der Metalldampflampe 7, eine Fresnellinse 8, ein LCD 9 sowie zwei Gebläse 10, 11.

Das Innere des Gehäuses 1 ist durch Trennwende 12 und die Fresnellinse 8 in mindestens zwei Räume 13, 14 unterteilt. Der Raum 13 ist winkelförmig gestaltet und weist zwei Schenkel 13A, 13B auf. Er umgibt den Raum 14 auf zwei Seiten. Die Trennwand 12 und die Fresnellinse 8 bilden dabei eine thermische Abschirmung bzw.Trennung zwischen den beiden Räumen. Im Schenkel 13A des winkelförmigen Raumes 13 befindet sich ein Lufteinlaßgitter 15, hinter und neben dem die Elektronik 16 für die Metalldampflampe angeordnet ist. An dieser vorbei wird die durch das Lufteinlaßgitter 15 eintretende Luft vom Querstromgebläse 10 angesaugt und in den Schenkel 13B des Raumes 13 hineingedrückt, wo die Luft beidseitig am LCD 9, an der Unterseite der glasklaren Schreibplatte 6 und an der Oberseite der Fresnellinse 8 vorbeistreicht, dann an der Elektronik 17 für das LCD vorbeistreicht und durch das Luftauslaßgitter 18 den Raum 13 verläßt.

Bei dieser Anordnung wird durch die von unten her in das Gehäuse 1 eintretende Luft zuerst die Elektronik 16 für die Metalldampflampe 7 gekühlt, was für einen gefahrlosen Betrieb der Metalldampflampe 7 von großer Bedeutung ist.

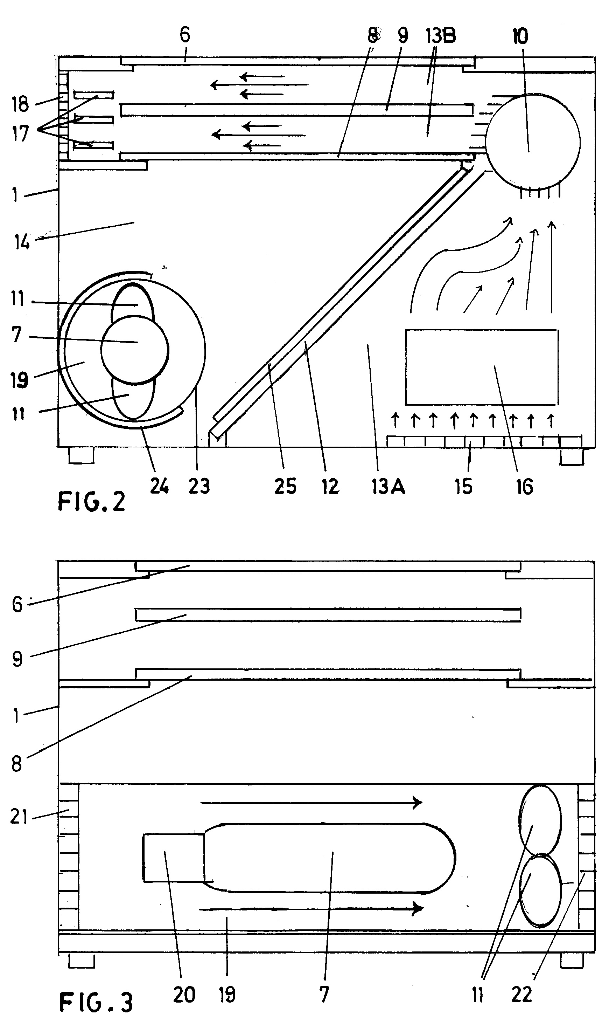

Im Raum 14 befindet sich die Metalldampflampe 7 mit ihrem Sockel 20. Sie kann, wie die Fig. 2 und 3 zeigen, in einem Kanal 19 untergebracht sein, in welchem durch das Lufteinlaßgitter 21 Luft mittels des Axialgebläses 11 angesaugt wird, die den Kanal 19 durch das Luftauslaßgitter 22 verläßt. Der Luftkanal 19 ist durch ein Rohr gebildet, welches aus zwei Teilen besteht, einem lichtdurchlässigen Teil 23 und einem lichtundurchlässigen Teil 24. Der lichtdurchlässige Teil 23 ist auf den Umlenkspiegel 25 gerichtet, welcher von der Trennwand 12 getragen wird. Der Umlenkspiegel 25 lenkt das aus der Metalldampflampe 7 austretende Licht auf die Fresnellinse 8, so daß das Licht durch diese Fresnellinse 8 hindurchtreten kann und dann weiter durch das LCD 9 und die Schreibplatte 6 zum Projektionskopf 3 gelangen kann.

Beiderseits des Umlenkspiegels 25 können Licht absorbierende und/oder reflektierende dunkel gefärbte Abschirmbleche oder -wände angebracht sein, deren Winkelstellung dafür sorgt, daß keine Strahlung der Metalldampflampe durch Luftein- und auslaßgitter nach außen tritt. Auch in der Umgebung der Lampe sind zweckmäßigerweise entsprechende Abschirmbleche angebracht.

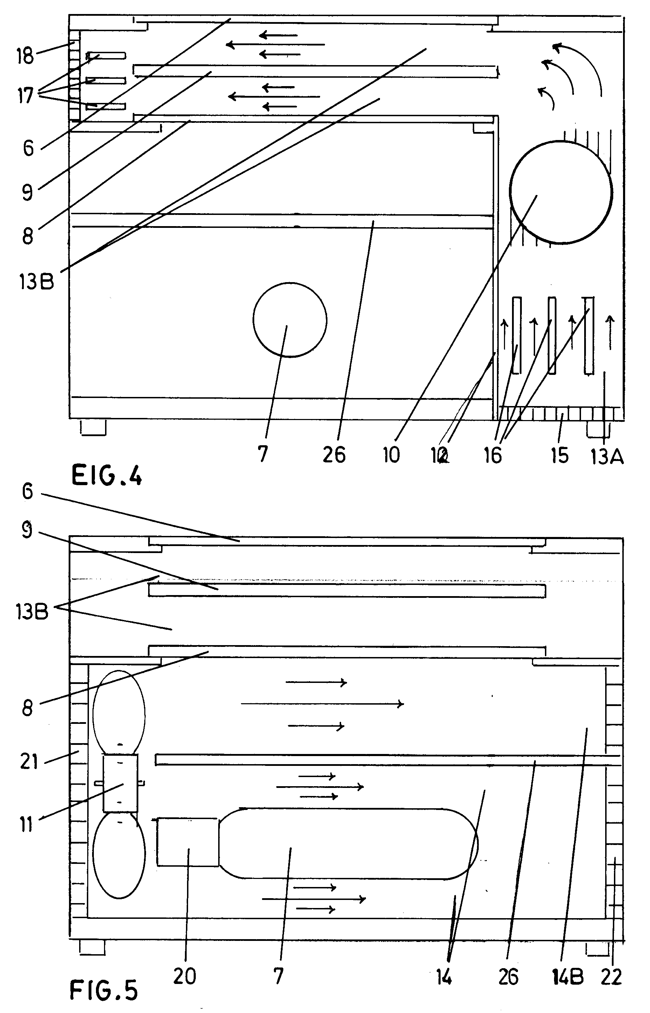

Im Ausführungsbeispiel der Fig. 4 und 5 ist der Raum 14 durch eine lichtdurchlässige, Wärmestrahlung absorbierende Platte 26 in zwei Teile unterteilt, welche beide durch die vom Axialgebläse 11 vom Lufteinlaßgitter 21 zum Luftauslaßgitter 22 geförderte Luft durchstrichen wird.

Die winkelförmige Gestaltung des Raumes 13 bringt den Vorteil mit sich, daß das Querstromgebläse 10 in sehr vorteilhafter Weise unterbringbar ist.

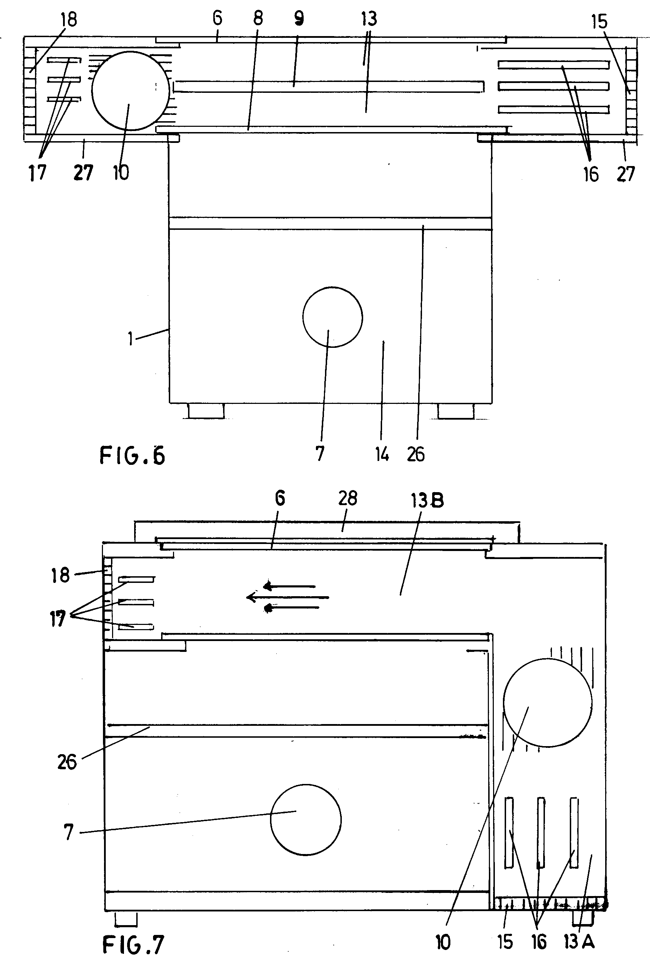

Fig. 6 zeigt eine weitere Möglichkeit der Gestaltung eines Projektors der eingangs genannten Art: Hier ist der Raum 13 nicht mehr winkelförmig gestaltet, sondern lediglich oberhalb des Raumes 14 angeordnet. Dieser Raum 13 steht auf beiden Seiten über den Raum 13 hinaus, die Unterbringung des Querstromgebläses 10 ist hier jedoch nicht so einfach wie das bei den anderen Ausführungen der Fall ist: Das Querstromgebläse 10 ist hier vor der Elektronik 17 für das LCD angeordnet, um hinter dem Lufteinlaßgitter 15 ausreichend Raum für die Elektronik 16 der Metalldampflampe 7 zu haben. Durch diese Gestaltung ergibt sich eine Bauform, bei der die beidseitig über den Raum 13 hinausstehenden Teile des Raumes 14 Vorsprünge 27 bilden, die beim Tragen des Projektors von beiden Händen ergriffen werden und somit das Tragen des Projektors erleichtern.

Ein Hitzefilter, das zwischen Lampe und Umlenkspiegel angeordnet ist, kann gute Dienste leisten und Wärmeeinwirkungen auf das LCD vermindern.

In der Ausführung als tragbares Projektionsgerät wird mindestens ein Gelenk am und/oder im Tragarm vorgesehen, weiter ist es vorteilhaft, ein Varioobjektiv einzubauen.

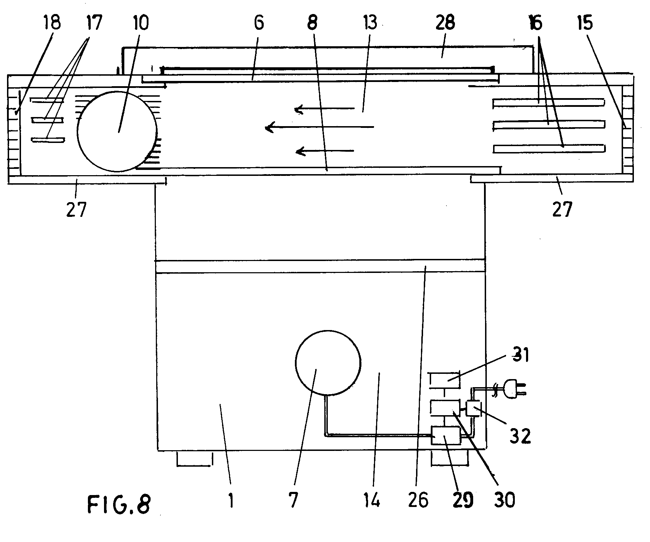

In den Fig.7 und 8 sind Ausführungsbeispiele von Overheadprojektoren gezeigt, bei denen die Flüssigkristallanzeigevorrichtung nicht in den Raum 13 eingebaut ist, sondern als auf die Schreibplatte aufzulegendes Gerät 28 ausgeführt ist. Auch hier ist es von hohem Vorteil, wenn die Lichtquelle eine Metalldampflampe 7 aufweist, wenn die Metalldampflampe 7 mit Hilfe einer elektronischen Steuerungsvorrichtung 16 betrieben wird, wenn das Gehäuse 1 zwei von je einem Gebläse 10,11 belüftete Räume 13,14 aufweist, die durch eine thermische Isolierung voneinander getrennt sind, von denen der eine Raum 14 die Metalldampflampe 7 und der andere Raum die Fresnellinse 8, und die Elektronik 16 für die Metalldampflampe 7 sowie die Elektronik 17 für das LCD 9 aufnimmt. Das LCD selbst ist hier in einem gesonderten Rahmen untergebracht, welcher als gesondertes Gerät 28 auf die Schreibplatte aufzusetzen ist.

Da eine Metalldampflampe 7 im allgemeinen mehr als 750 Betriebsstunden arbeitet, ohne durch Explosion zerstört zu werden, ist für den Betrieb der Metalldampflampe ein Betriebsstundenzähler und eine vom Betriebsstundenzähler gesteuerte Abschaltvorrichtung vorgesehen, die das Projektionsgerät nach 750 Betriebsstunden außer Betrieb setzt, wobei es zweckmäßig ist, wenn eine bestimmte Zeit vor der Außerbetriebssetzung eine Vorwarneinrichtung in Tätigkeit tritt und durch Licht- oder akustische Signale auf das Ende der Betriebsdauer hinweist.

Vorteilhaft ist es, wenn für den Betrieb der Metalldampflampe 7 ein Betriebsstundenzähler 30 und eine vom Betriebsstundenzähler 30 gesteuerte Abschaltvorrichtung 29 vorgesehen ist, die das Projektionsgerät nach einer bestimmten Anzahl von Betriebsstunden, vorzugsweise 750 Betriebsstunden, außer Betrieb setzt, wobei es zweckmäßig ist, wenn eine bestimmte Zeit vor der Außerbetriebssetzung eine Vorwarneinrichtung 31 in Tätigkeit tritt und durch Licht- oder akustische Signale auf das Ende der Betriebsdauer hinweist. Von dem Geräteschalter 32 führt eine elektrische Leitung in den Betriebsstundenzähler 30, an den einerseits die Abschaltvorrichtung 29 als auch die Vorwarneinrichtung 31 angeschlossen sind. Nach 749 Betriebsstunden wird vom Betriebsstundenzähler 30 die Vorwarneinrichtung 31 und eine Stund später die Abschaltvorrichtung 29 in Tätigkeit gesetzt. Nach Lampenwechsel wird der Betriebsstundenzähler 30 auf Null zurückgeschaltet.

### Liste der Bezugszeichen

- 1: Gehäuse
- 2: Tragarm
- 3: Projektionskopf
- 4: Objektiv
- 5: Umlenkspiegel
- 6: glasklare Schreibplatte
- 7: Metalldampflampe
- 8: Fresnellinse
- 9: LCD (Liquid Crystal Display = Flüssigkristallanzeigegerät)
- 10: Querstromgebläse
- 11: Axialgebläse
- 12: Trennwand
- 13: Raum
- 14: Raum
- 15: Lufteinlaßgitter
- 16: Elektronik für Metalldampflampe
- 17: Elektronik für LCD
- 18: Luftauslaßgitter
- 19: Luftkanal
- 20: Sockel der Metalldampflampe
- 21: Lufteinlaßgitter
- 22: Luftauslaßgitter
- 23: lichtdurchlässiger Teil
- 24: lichtundurchlässiger Teil
- 25: Umlenkspiegel
- 26: Wärmestrahlung absorbierende Platte
- 27: Vorsprünge
- 28: aufzulegendes Flüssigkristallanzeigegerät
- 29: Abschaltvorrichtung
- 30: Betriebsstundenzähler
- 31: Vorwarneinrichtung
- 32: Geräteschalter

## Patentansprüche

1. Overheadprojektor für die Projektion von mittels eines LCD (9) dargestellten Bildern,
bestehend aus einem Gehäuse (1), an dem ein Tragarm (2) für den Projektionskopf (3) angeordnet ist, welches in seiner Oberfläche eine glasklare Platte (6) aufweist und in welchem die Lichtquelle, eine Fresnellinse(8) , Gebläse (10,11) und Elektronik (16,17) untergebracht sind,
dadurch gekennzeichnet,
daß die Lichtquelle eine Metalldampflampe (7) aufweist,
daß die Metalldampflampe (7) mit Hilfe einer elektronischen Steuerungsvorrichtung (16) betrieben wird,
daß das Gehäuse (1) zwei von je einem Gebläse (10,11) belüftete Räume (13,14) aufweist,
die durch eine thermische Isolierung voneinander getrennt sind,
von denen der eine (14) die Metalldampflampe (7) und der andere (13) die Fresnellinse (8), und die Elektronik (16) für die Metalldampflampe (7) sowie die Elektronik (17) für das LCD (9) aufnimmt,
vorzugsweise in der Reihenfolge (in Strömungsrichtung gesehen) zuerst die Elektronik (16) für die Metalldampflampe (7) und dann die Elektronik (17) für das LCD (9), wobei das Gebläse vorzugsweise zwischen diesen beiden elektronischen Bauteilen angeordnet ist.

2. Overheadprojektor nach Anspruch 1,
dadurch gekennzeichnet,
daß das LCD (9) in dem Raum (13) untergebracht ist, welcher die Elektronik (16) für die Metalldampflampe (7) sowie die Elektronik (17) für das LCD (9) aufnimmt,
und daß in Strömungsrichtung des Kühlluftstromes zuerst die Elektronik (16) für die Metalldampflampe (7), dahinter das LCD (9) und dann die Elektronik (17) für das LCD (9) angeordnet ist.

3. Overheadprojektor nach Anspruch 1,
dadurch gekennzeichnet,
daß die Räume (13,14) im Overheadprojektor zumindest teilweise übereinander angeordnet sind und daß die Richtung des Luftstromes des einen Raumes (13) quer zu der Richtung des Luftstromes des anderen Raumes (14) verläuft.

4. Overheadprojektor nach Anspruch 1,
dadurch gekennzeichnet,
daß der das LCD (9) und Elektronik (16,17) aufnehmende Raum (13) oberhalb des die Metalldampflampe (7) aufnehmenden Raumes (14) angeordnet ist und durch einen seitlich des die Metalldampflampe (7) aufnehmenden Raumes (14) befindlichen Luftkanal (13A) winkelförmig gestaltet ist.

5. Overheadprojektor nach Anspruch 1,
dadurch gekennzeichnet,
daß der die Metalldampflampe (7) aufnehmende Raum (14) von einem Axialgebläse (11) und der das LCD (9) und Elektronik (16,17) aufnehmende Raum (13) von einem Querstromgebläse (10) durchlüftet ist.

6. Overheadprojektor nach Anspruch 1,
dadurch gekennzeichnet,
daß die Trennwand zwischen den beiden Räumen durch einen Umlenkspiegel (25) oder eine den Umlenkspiegel (25) tragende Wand (12) oder Abschattungswände, die störende Lichtstrahlung reflektieren oder absorbieren, gebildet ist.

7. Overheadprojektor nach Anspruch 1,
dadurch gekennzeichnet,
daß im Luftstrom des den LCD (9) und Elektronik (16, 17) aufnehmenden Raumes (13) in Strömungsrichtung zuerst die die Metalldampflampe (7) betreibende Elektronik (16), dann das LCD-Netzteil, dann das LCD (9) und schließlich die das LCD (9) betreibende Elektronik (17) untergebracht sind
und daß vorzugsweise das Querstromgebläse (10) zwischen der die Metalldampflampe (7) betreibenden Elektronik (16) und dem LCD (9) angeordnet ist.

8. Overheadprojektor nach Anspruch 1,
dadurch gekennzeichnet,
daß die Fresnellinse (8) eine Begrenzungswand zwischen dem das LCD (9) und Elektronik (16,17) aufnehmenden Raum (13) und dem die Metalldampflampe (7) aufnehmenden Raum (14) bildet,
oder daß eine nur Kaltlicht durchlassende Platte (26) die Begrenzungswand zwischen dem das LCD (9) und die Elektronik (16,17) aufnehmenden Raum (13) und dem die Metalldampflampe (7) aufnehmenden Raum (14) bildet.

9. Overheadprojektor nach Anspruch 1,
dadurch gekennzeichnet,
daß der das LCD (9) und die Elektronik (16,17) sowie das Querstromgebläse (10) aufnehmende Raum (13) auf zwei Seiten über den die Metalldampflampe (7) aufnehmenden Raum (14) übersteht.

10. Overheadprojektor nach Anspruch 1,
dadurch gekennzeichnet,
daß für den Betrieb der Metalldampflampe (7) ein Betriebsstundenzähler (30) und eine vom Betriebsstundenzähler (30) gesteuerte Abschaltvorrichtung 29) vorgesehen ist, die das Projektionsgerät nach einer bestimmten Anzahl von Betriebsstunden, vorzugsweise 750 Betriebsstunden, außer Betrieb setzt, wobei es zweckmäßig ist, wenn eine bestimmte Zeit vor der Außerbetriebssetzung eine Vorwarneinrichtung (31) in Tätigkeit tritt und durch Licht- oder akustische Signale auf das Ende der Betriebsdauer hinweist.
